# EUROPEAN PATENT SPECIFICATION

(11) **EP 3 209 026 B1**
(45) Date of publication and mention of the grant of the patent: **13.02.2019**
(21) Application number: 15850055.3
(22) Date of filing: 14.10.2015
(51) Int. Cl.: H04Q 9/00, H04M 1/00, H04M 11/00

(54) **CONTROL PROCESSING METHOD, ELECTRIC DEVICE, AND CONTROL PROCESSING PROGRAM**
STEUERUNGSVERARBEITUNGSVERFAHREN, ELEKTRISCHE VORRICHTUNG UND STEUERUNGSVERARBEITUNGSPROGRAMM
PROCÉDÉ DE TRAITEMENT DE RÉGULATION, DISPOSITIF ÉLECTRIQUE, ET PROGRAMME DE TRAITEMENT DE RÉGULATION

(30) Priority: 15.10.2014 JP 2014210929
(43) Date of publication of application: 23.08.2017
(73) Proprietor: Panasonic Intellectual Property Management Co., Ltd., Osaka-shi, Osaka 540-6207 (JP)
(72) Inventor: MORISHITA, Tatsuya, Osaka 540-6207 (JP); MIKI, Tadashi, Osaka 540-6207 (JP); YOSHIMURA, Yasuo, Osaka 540-6207 (JP); TOYOTA, Hiromi, Osaka 540-6207 (JP); HAYASHI, Masaki, Osaka 540-6207 (JP); NISHIDA, Hiroki, Osaka 540-6207 (JP)
(74) Representative: Eisenführ Speiser
(86) International application number: PCT/JP2015/005188
(87) International publication number: WO 2016/059792

(56) References cited:
- EP-A1- 2 023 052
- EP-A1- 2 333 690
- JP-A- 2005 244 373
- JP-A- 2007 124 218
- JP-A- 2014 216 884
- US-A1- 2007 050 503

## Description

### TECHNICAL FIELD

The present invention relates to a control processing method, an electric device, and a control processing program for implementing an operation content indicated by an operation command which is received from a control terminal.

### BACKGROUND ART

In a case where in a conventional control processing method, an electric device tries to implement an operation command instructed by a control command, after a control command from a control terminal is received in the electric device that is a controlled apparatus. When the operation command can be implemented, the operation result is notified to the control terminal (for example, refer to PTL 1).

By such a series of a process procedure, a user who transmits the control command from the control terminal can confirm whether the control command is received by the electric device.

In a case where a command specification of an industry standard is designed, the electric device is not necessarily an electric device which is capable of corresponding to the command specification. For example, since a standard commands correspond to the electric devices of many manufacturing companies, a plurality of standard commands are present, and it may be difficult for some of the manufacturing company or the apparatus to correspond to all of the standard commands.
PTL 2 describes a remote-operated unit of a user terminal apparatus remote-operated through network from a remote terminal apparatus of a support staff, which sends image information of a changed portion to the remote terminal apparatus to display a business screen in an interlocked manner when a change is detected in the business screen displayed by a business processing unit with an image-information transmission unit. When an operation-information reception unit receives remote operation information of a mouse or keyboard from the remote terminal apparatus, a remote-operation prohibited region management unit refers to a remote-operation prohibited region table and prohibits remote operation if the remote operation information is within the operation prohibited region.
PTL 3 describes a management system for a function executed in a mobile terminal, and in particular, a management system which can manage a function executed even if a mobile terminal is outside of a wireless area. The management system includes a mobile phone terminal configured to store an execution history when an execution history target function, whose execution history should be stored, as one of functions is executed; and a server unit configured to acquire said execution history from the mobile phone terminal to store for every mobile phone terminal. The mobile phone terminal notifies the execution history to the server unit at said preset timing or when a notice of said execution history is requested from said server unit.
PTL 4 describes an equipment item management system for managing, controlling, servicing, and/or maintaining equipment items such as air conditioners used in facilities such as buildings and stores. More particularly, it relates to an equipment item management system for centrally controlling mixedly existing equipment items that employ different communication methods of a plurality of manufacturers, using one central management apparatus.

### Citation List

### Patent Literature

PTL 1: Japanese Patent Unexamined Publication No. 2002-078047
PTL 2: United States Patent Publication No. 2007/0050503 A1
PTL 3: European Patent Publication No. EP 2 333 690 A1
PTL 4: European Patent Publication No. EP 2 023 052 A1

### SUMMARY OF THE INVENTION

The present invention has been conceived to solve the above-described conventional problems, and provides a control processing method, the electric device, and a control processing program, which can smoothly control an electric device, when the electric device receives an unsupported command.

The invention is a control processing method of an electric device for implementing an operation content indicated by an operation command received from a control terminal, the method including a step of discriminating whether the received operation command is a predetermined operation command, and a step of notifying the control terminal that the operation command is an unsupported command without implementing the operation content indicated by the operation command, in a case where the received operation command is the predetermined operation command whereby in the step of discriminating whether a received operation command is a predetermined operation command, the electric device uses a table indicating an unsupported operation command.

In addition, an electric device of the invention is an electric device including a processor for implementing an operation content indicated by an operation command which is received from a control terminal, in which the processor discriminates whether the received operation command is a predetermined operation command, and in a case where the received operation command is an unsupported operation command, the processor notifies the control terminal that the operation command is an unsupported command without implementing the operation content indicated by the operation command whereby in the step of discriminating whether a received operation command is a predetermined operation command, the electric device uses a table indicating an unsupported operation command.

Furthermore, a control processing program of the invention is a control processing program of an electric device for implementing an operation content indicated by an operation command which is received from a control terminal, the program causing a processor of the electrical device to execute: a step of discriminating whether the received operation command is a predetermined operation command, and a step of notifying the control terminal that the operation command is an unsupported operation command without implementing the operation content indicated by the operation command, in a case where the received operation command is the predetermined operation command whereby in the step of discriminating whether a received operation command is a predetermined operation command, the electric device uses a table indicating an unsupported operation command.

Therefore, in a case where a command specification of an industry is designed, although the electric device receives an unsupported command, the electric device can be smoothly controlled.

As described above, according to the control processing method, the electric device, and the control processing program of the invention, even when the electric device receives an unsupported command, the electric device can be smoothly controlled.

The invention is set out in the appended set of claims. The embodiments and/or examples of the following description which are not covered by the appended claims are considered as not being part of the present invention.

### BRIEF DESCRIPTION OF DRAWINGS

FIG. 1 is a diagram illustrating a configuration of a system in a first exemplary embodiment of the invention.
FIG. 2 is a diagram illustrating a configuration of a server in the first exemplary embodiment of the invention.
FIG. 3 is a diagram illustrating a configuration of a mobile terminal in the first exemplary embodiment of the invention.
FIG. 4 is a diagram illustrating a configuration of an electric device in the first exemplary embodiment of the invention.
FIG. 5 is a diagram illustrating a configuration of a gateway in the first exemplary embodiment of the invention.
FIG. 6 is a diagram illustrating a sequence of the system in the first exemplary embodiment of the invention.
FIG. 7 is a diagram illustrating a process flow of the electric device in the first exemplary embodiment of the invention.
FIG. 8 is a diagram illustrating an example of a command conversion table in a second exemplary embodiment of the invention.
FIG. 9 is a diagram illustrating a process flow of the electric device in the second exemplary embodiment of the invention.
FIG. 10 is a diagram illustrating another example of the command conversion table in the second exemplary embodiment of the invention.
FIG. 11 is a diagram illustrating still another example of the command conversion table in the second exemplary embodiment of the invention.
FIG. 12 is a diagram illustrating further still another example of the command conversion table in the second exemplary embodiment of the invention.
FIG. 13 is a diagram illustrating an example of a display content conversion table in a third exemplary embodiment of the invention.
FIG. 14 is a diagram illustrating a process flow of an electric device in the third exemplary embodiment of the invention.
FIG. 15 is a diagram illustrating another example of the display content conversion table in a third exemplary embodiment of the invention.

### DESCRIPTION OF EMBODIMENTS

Hereinafter, exemplary embodiments of the invention will be described with reference to drawings. The invention is not limited to these exemplary embodiments.

### (FIRST EXEMPLARY EMBODIMENT)

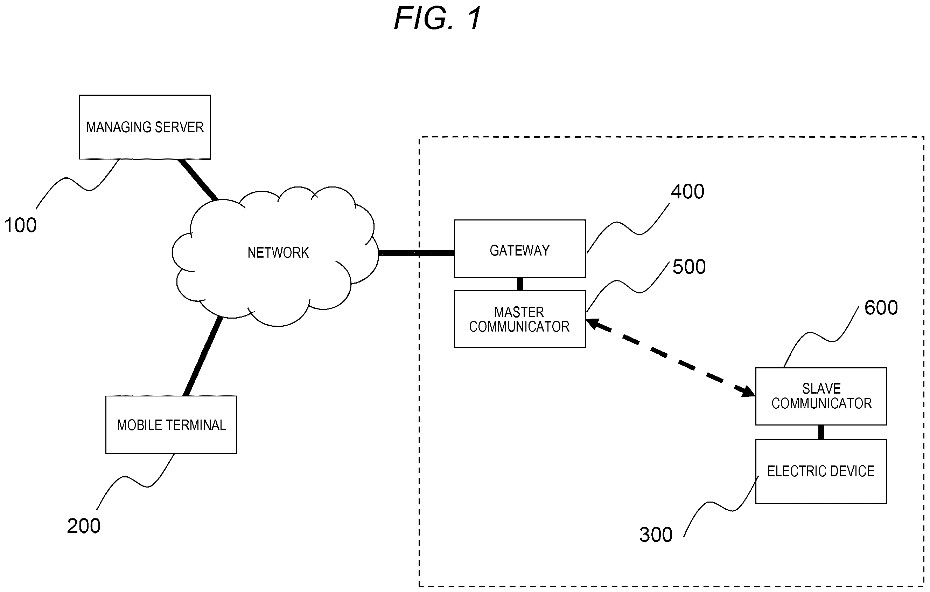

FIG. 1 is a diagram illustrating a configuration of a control system for controlling an electric device remotely in a first exemplary embodiment of the invention.

This control system is configured of managing server 100, electric device 300, and mobile terminal 200 that is a control terminal. Gateway 400 is disposed for relaying between managing server 100 or mobile terminal 200 and electric device 300.

Master communicator 500 is housed in gateway 400 or is externally attached to gateway 400. Slave communicator 600 is housed in electric device 300 or is externally attached to electric device 300. Master communicator 500 is communicated with slave communicator 600 in a wireless manner. Accordingly, a communication between gateway 400 and electric device 300 can be obtained.

Managing server 100 is connected to gateway 400 via a network and transmits and receives information for controlling electric device 300.

Mobile terminal 200 is, for example, a computer terminal to be used by a user and a personal computer or a smartphone.

Electric device 300 transmits data detected by various sensors provided in electric device 300 and data of an operation state or an operation history of electric device 300 to the managing server. Electric device 300 receives a control command from mobile terminal 200 and performs an operation in accordance with the received control command.

Electric device 300 is selected from, an air conditioner, a laundry machine, and a refrigerator, for example. In addition to this, electric device 300 may be a cooking appliance such as a rice cooker or an oven, a dishwasher, AV equipment such as a television or a radar, hot-water equipment, and lighting equipment. In addition, electric device 300 may be any electric device as long as electric device 300 is a device using electricity and may not only be a household electric device but also an electric vehicle.

Means for performing a communication between master communicator 500 and slave communicator 600 may be a wireless communication using a specified small power communication such as ZigBee (registered trademark) and may be a wireless communication such as Bluetooth (registered trademark).

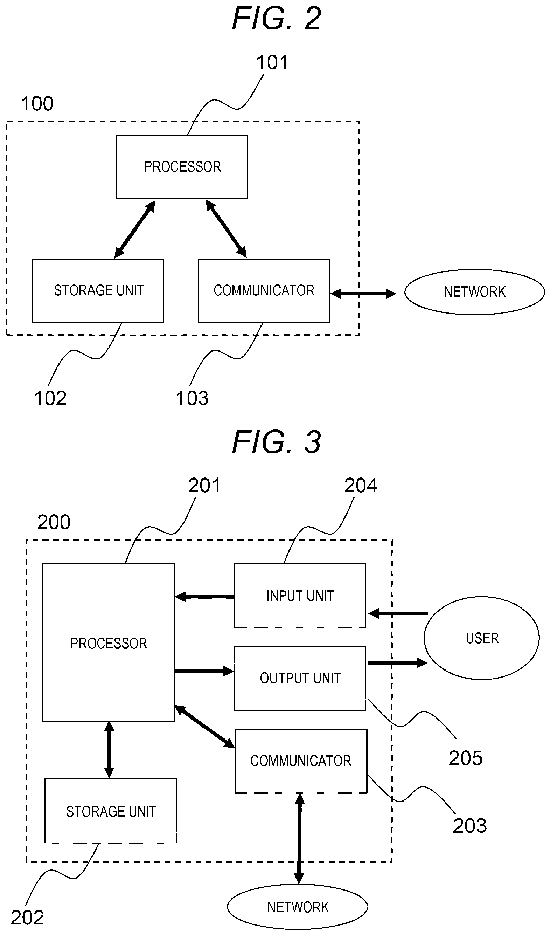

FIG. 2 is a diagram illustrating an example of hardware configuration of managing server 100 in a first exemplary embodiment of the invention.

Managing server 100 is configured of processor 101, storage unit 102, and communicator 103.

Processor 101 is, for example, a processor such as a CPU. Processor 101 is connected to storage unit 102. Processor 101 is connected to the network via communicator 103 and communicated with electric device 300 or mobile terminal 200 via the network.

Communicator 103 includes a receiver and a transmitter. The receiver receives a signal from electric device 300 via mobile terminal 200 or gateway 400. The transmitter transmits the signal to electric device 300 via mobile terminal 200 or gateway 400. Communication means by communicator 103 may be a wireless communication or may be a wired communication.

Storage unit 102 is, for example, a memory device. A program and data to be used in processor 101 are stored in storage unit 102.

FIG. 3 is a diagram illustrating an example of hardware configuration of mobile terminal 200 in the first exemplary embodiment of the invention.

Mobile terminal 200 is configured of processor 201, storage unit 202, communicator 203, input unit 204, and output unit 205.

Processor 201 is, for example, a processor such as a CPU. Processor 201 is connected to storage unit 202. Processor 201 is connected to the network via communicator 203 and communicated with managing server 100 or gateway 400 via the network. Communication means by communicator 203 is preferably a wireless communication in convenience of a user and may be a wired communication.

Storage unit 202 is, for example, a memory device. A program and data to be used in processor 201 are stored in storage unit 202.

Input unit 204 is a device for inputting an operation or the like by the user, and includes a switch, a key, or a touch panel. Input unit 204 may be a microphone for inputting a sound. Input information is transmitted to processor 201.

Output unit 205 is a device for outputting information toward the user or the like, and a display device such as a LED monitor. Output unit 205 may be a speaker for outputting the sound.

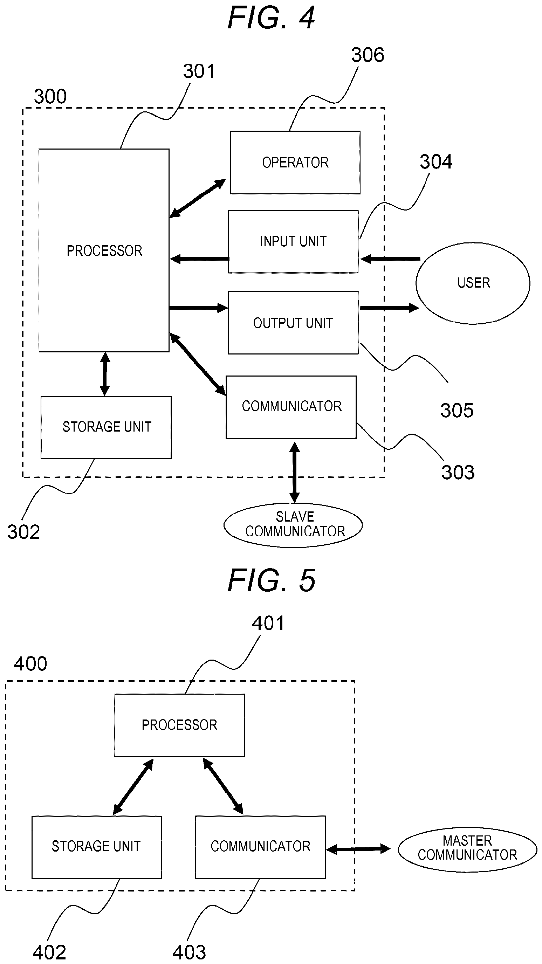

FIG. 4 is a diagram illustrating an example of a hardware configuration of electric device 300 in the first exemplary embodiment of the invention.

Electric device 300 is configured of processor 301, storage unit 302, communicator 303, input unit 304, output unit 305, and operator 306.

Processor 301 is, for example, a processor such as a CPU (computer). Processor 301 is connected to storage unit 302. Processor 301 is connected to slave communicator 600 via communicator 303. Communication means by communicator 303 is preferably a wireless communication in convenience of a user but may also be a wired communication. Processor 301 performs various types of processes to be described based on the program stored in storage unit 302.

Storage unit 302 is, for example, a memory device. A program and data to be used in processor 301 are stored in storage unit 302.

Input unit 304 is a device for inputting an operation or the like by the user, and includes a switch, a key, or a touch panel. Input unit 304 may be a microphone for inputting a sound. Input information is transmitted to processor 301.

Output unit 305 is a device for outputting information toward the user or the like, and a display device such as a LED monitor. Output unit 305 may be a speaker for outputting the sound.

FIG. 5 is a diagram illustrating an example of hardware configuration of gateway 400 in the first exemplary embodiment of the invention.

Gateway 400 is configured of processor 401, storage unit 402, and communicator 403.

Processor 401 is, for example, a processor such as a CPU. Processor 401 is connected to storage unit 402. Processor 401 is connected to the network via communicator 403 and communicated with managing server 100 via the network. In addition, processor 401 communicates with master communicator 500 and slave communicator 600 via communicator 403 to communicate with electric device 300. Storage unit 402 is, for example, a memory device. A program and data to be used in processor 301 are stored in storage unit 402.

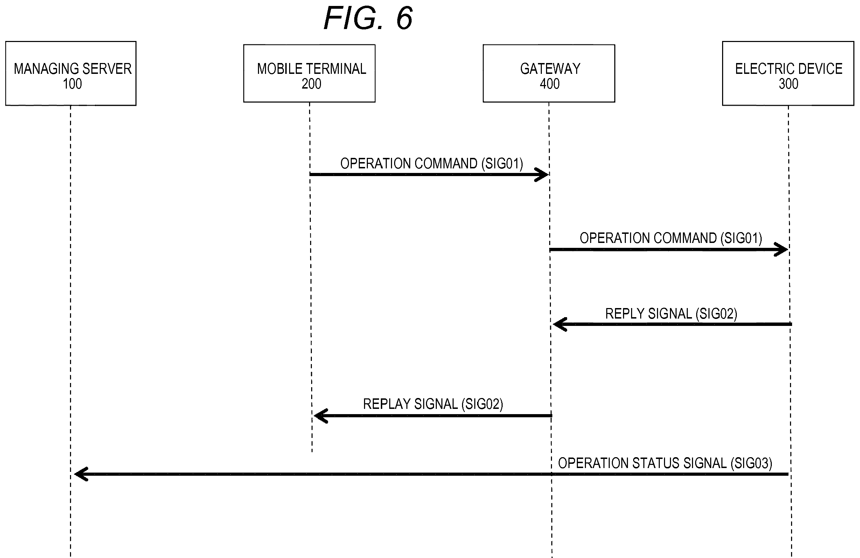

FIG. 6 is a diagram illustrating a sequence in the control system illustrated in FIG. 1.

A sequence of the communication and a flow of information or the like will be described with reference to FIG. 6.

Mobile terminal 200 transmits an operation command (SIG 01) for remotely controlling electric device 300 to gateway 400 via the network. Gateway 400 which receives the operation command (SIG 01) transmits the operation command (SIG 01) to predetermined electric device 300 based on a destination (electric device to be remotely controlled) included in the operation command.

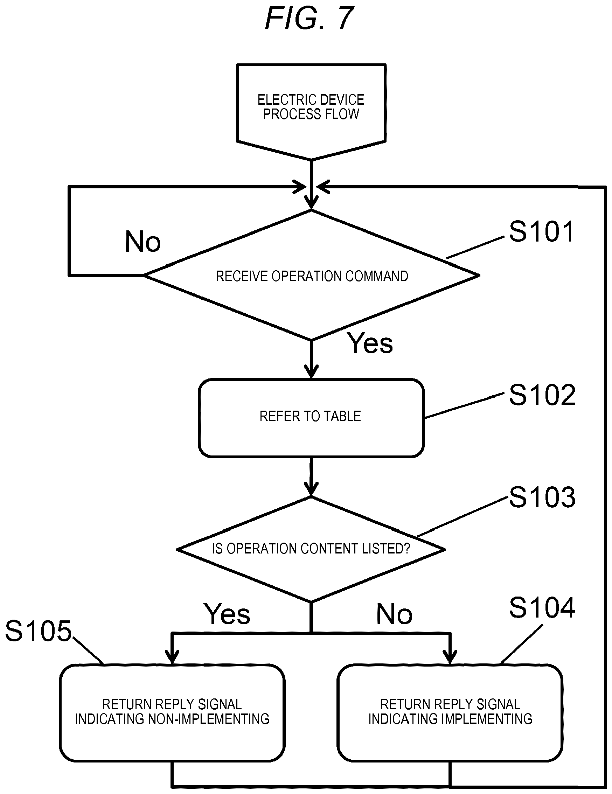

Electric device 300 which receives the operation command (SIG 01) returns a reply signal (SIG 02) indicating whether the operation content which is indicated by the operation command is implemented to mobile terminal 200 which transmitted the operation command via gateway 400, through a predetermined processes illustrated in FIG. 7 below.

In addition, electric device 300 transmits an operation status signal (SIG 03) to managing server 100 via gateway 400 after a lapse of a predetermined time from the transmission of the reply signal (SIG 02). The operation status signal (SIG 03) is a signal including a content indicating an operation status of electric device 300 at a time point of the signal.

By performing the above communication sequences and receiving and transmitting information items, mobile terminal 200 can perform a remote control with respect to electric device 300 remotely.

In FIG. 6, although not illustrated using master communicator 500 and slave communicator 600, in the communication between gateway 400 and electric device 300, since it is needless to say that master communicator 500 and slave communicator 600 are used, the description thereof is omitted.

FIG. 7 is a diagram illustrating a process flow of electric device 300 in a case where the operation command is received in the first exemplary embodiment of the invention.

Electric device 300 confirms whether the operation command is received via communicator 303 (S101). If the operation command is received (S101, Yes), processor 301 determines whether the operation content indicated by the operation command is listed on an inhibited operation table (S103) by referring to the inhibited operation table which is stored in storage unit 302 in advance (S102).

Here, the inhibited operation table is a table in which the operation content which must not be implemented and a reason not to be implemented are listed for each of the operation contents indicated by the operation command, in a case where a remote control request is received via the operation command, in electric device 300.

The inhibited operation table is managed by the manufacturing company of electric device 300. The manufacturing company replaces the table stored in storage unit 302 from managing server 100 via the network and gateway 400 as needed. Accordingly, the manufacturing company can designate the operation command which must not be implemented and the reason.

In a case where processor 301 determines that the operation content indicated by the operation command is not listed on the inhibited operation table (S103, No), processor 301 controls to implement the operation content indicated by the operation command via operator 306. The reply signal which indicates that the operation content indicated by the operation command is implemented is returned to mobile terminal 200 (S104).

On the other hand, in a case where processor 301 determines that the operation content indicated by the operation command is listed on the inhibited operation table (S103, Yes), processor 301 performs so as not to implement the operation command indicated by the operation content via operator 306. The reply signal which indicates that the operation content indicated by the operation command is not implemented is returned to mobile terminal 200 (S105).

Here, in the reply signal returned in step S105, information which indicates that the operation command indicated by the operation content is not implemented and information indicating the reason why the operation content indicated by the operation command is not implemented are included. The user can confirm these information items as a message via output unit 205 of mobile terminal 200.

The content of the message is that "the transmitted operation cannot be executed. The reason is that it is determined that the operation transmitted from the manufacturing company of household electric appliance has a problem in terms of safety.", for example. In addition, the content of the other messages is that "the transmitted operation cannot be executed. The reason is that it is determined that the transmitted operation content exceeds the performance of household electric appliance.".

In the present exemplary embodiment, it is described using the inhibited operation table. However, it may be described using a table in which the operation content which may be implemented is listed.

As described above, according to the present exemplary embodiment, it is possible to provide the electric device adapted to remote control which can flexibly correspond to a specific operation command.

### (SECOND EXEMPLARY EMBODIMENT)

Next, a second exemplary embodiment of the invention will be described.

In the second exemplary embodiment, a case where a command conversion table which is different from the inhibited operation table is retained in storage unit 302 will be described.

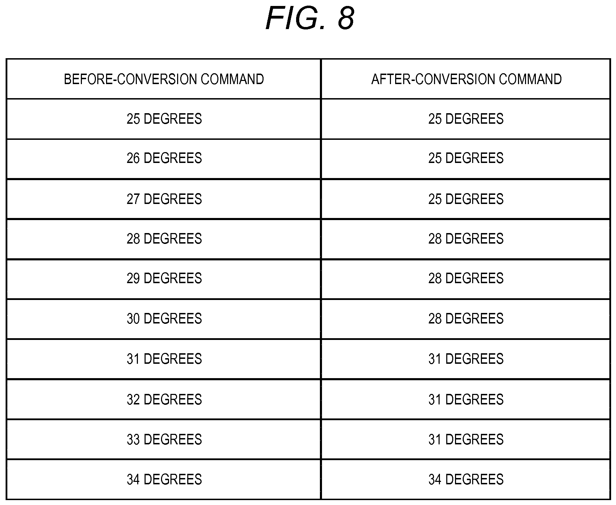

As illustrated in FIG. 8, the command conversion table includes a before-conversion command and an after-conversion command. The before-conversion command is, for example, a command which is supported in terms of a communication specification for remote controlling. In addition, the after-conversion command is a command that electric device 300 can support.

Here, it is assumed a case where the command before conversion (communication specification) does not correspond to the command after conversion (electric device) one by one.

FIG. 8 is an example of a command conversion table in a case where the electric device is air-conditioning equipment in the second exemplary embodiment of the invention.

The command before conversion can set a temperature by 1 degree in a range of 25 degrees to 34 degrees. With respect to this, the command after conversion indicates a case where a temperature can be set only in a three ways of 25 degrees, 28 degrees, and 31 degrees.

Here, in consideration of the user's safety, for example, when the command before conversion is 27 degrees, 25 degrees that is a maximum temperature lower than 27 degrees is set to a command after conversion. In the same manner, when the command before conversion is 30 degrees, 28 degrees is set to a command after conversion, and when the command before conversion is 33 degrees, 31 degrees is set to a command after conversion.

Inversely, when the command before conversion is 27 degrees, it may be set as the command conversion table such that 28 degrees that is a minimum temperature higher than 27 degrees is set to the command after conversion.

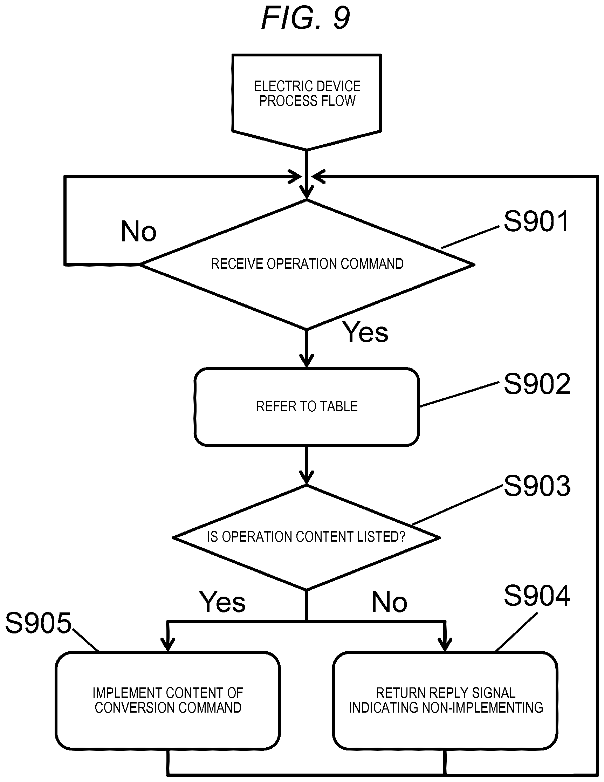

FIG. 9 is a diagram illustrating a process flow of electric device 300 in a case where a certain operation command is received in the second exemplary embodiment of the invention.

Electric device 300 confirms whether the operation command is received via communicator 303 (S901). If the operation command is received (S901, Yes), processor 301 determines whether the operation content indicated by the operation command is listed on the command conversion table (S903) by referring to the column of the before-conversion command among the command conversion table which is stored in storage unit 302 in advance (S902).

The command conversion table is managed by the manufacturing company of electric device 300. The manufacturing company can update the information by replacing the table stored in storage unit 302 from managing server 100 via the network and gateway 400 as needed.

In a case where processor 301 determines that the operation content indicated by the operation command is not listed on the column of the before-conversion command among the command conversion table (S903, No), processor 301 does not implement the operation content indicated by the operation command via operator 306. The reply signal which indicates that the operation content indicated by the operation command has not been implemented is returned to mobile terminal 200 (S904).

On the other hand, in a case where processor 301 determines that the operation content indicated by the operation command is listed on the column of the before-conversion command among the command conversion table (S903, Yes), processor 301 controls to implement the operation content indicated by the after-conversion command corresponding to the before-conversion command via operator 306 (S905). The reply signal which indicates that the operation content indicated by the operation command has been implemented is returned to mobile terminal 200.

Here, processor 301 may notify mobile terminal 200 that the operation command is changed from the before-conversion command to the after-conversion command. For example, the content is that "since the transmitted operation command (set temperature of 27 degrees) is a command which cannot be executed in terms of performance of the household electric appliance, the command is executed by converting the content to the similar content (set temperature of 25 degrees)".

In the present exemplary embodiment, storage unit 302 may store the command conversion table and the inhibited operation table and may store only the command conversion table.

The present exemplary embodiment implements the command conversion process in electric device 300. However, the present exemplary embodiment may implement a process based on the same manner as that of FIG. 9 in gateway 400.

Next, a command conversion table different from FIG. 8 will be described.

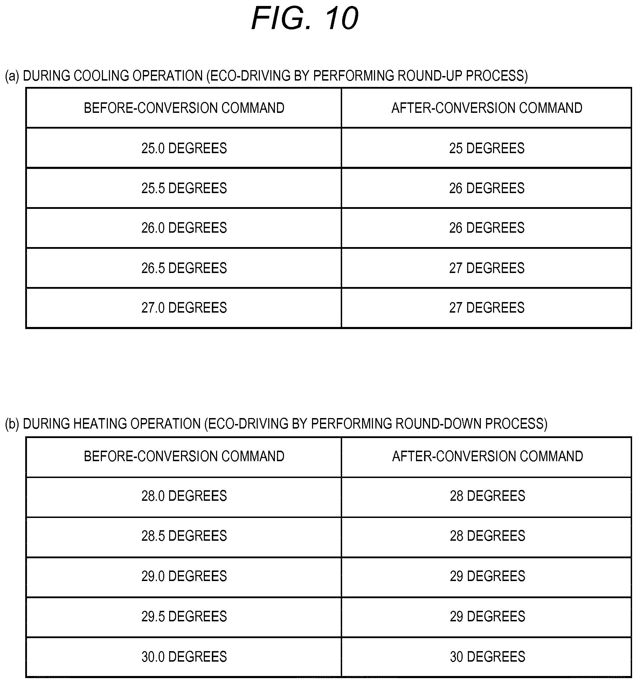

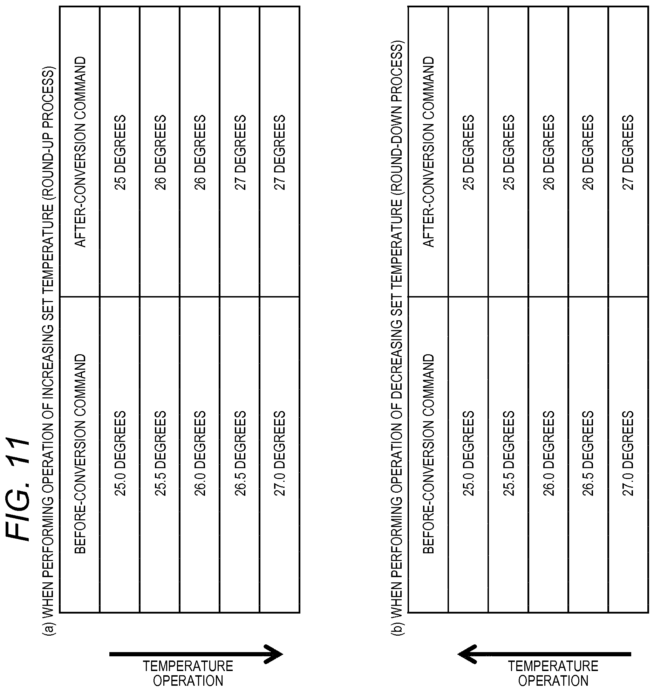

FIGS. 10 and 11 are diagram illustrating an example of a command conversion table in a case where the electric device is the air-conditioning equipment in the second exemplary embodiment of the invention.

While the before-conversion command (communication specification) can set the temperature by 0.5 degrees, the after-conversion command (air-conditioning equipment) can set the temperature by 1 degree.

In FIG. 10, for example, the command conversion table is switched between during the heating operation and during the cooling operation according to the operation status of the air-conditioning equipment.

During the cooling operation, as illustrated in FIG. 10(a), a round-up process of set temperature of 0.5 degrees is performed such that when the before-conversion command is 25.5 degrees, the after-conversion command is set to be 26 degrees. Accordingly, the energy saving of the air-conditioning equipment can be obtained.

In addition, during the heating operation, as illustrated in FIG. 10(b), a round-down process of set temperature is performed such that when the before-conversion command is 28.5 degrees, the after-conversion command is set to be 28 degrees. Accordingly, the energy saving of the air-conditioning equipment can be obtained.

The command conversion table may be configured to perform the round-down process during the cooling operation and to perform the round-up process during the heating operation. In addition, although not illustrated in drawings, a command conversion table on the information to be selected from humidity, an air flow, and a wind direction may be prepared in the same way as described above.

In FIG. 11, the command conversion table is switched according to the operation of the user, for example, according to the operation of the set temperature.

When the user performs an operation of increasing the set temperature, the round-up process is performed as illustrated in FIG. 11(a), for example, when the set temperature is changed from 25.0 degrees to 25.5 degrees, the round-up process is performed such that the after-conversion command is to be 26 degrees at a time when the before-conversion command is 25.5 degrees. Accordingly, by rapidly increasing the set temperature of the air-conditioning equipment, the operability is improved.

When the user performs an operation of decreasing the set temperature, the round-down process is performed as illustrated in FIG. 11(b), for example, when the set temperature is changed from 27.0 degrees to 26.5 degrees, the round-down process is performed such that the after-conversion command is to be 26 degrees at a time when the before-conversion command is 26.5 degrees. Accordingly, by rapidly decreasing the set temperature of the air-conditioning equipment, the operability is improved.

The command conversion table may be configured to perform the round-down process when the operation of increasing the set temperature is performed and to perform the round-up process when the decreasing operation is performed. In addition, although not illustrated in drawings, a command conversion table may be prepared on the information to be selected from humidity, an air flow, and a wind direction in the same way as described above.

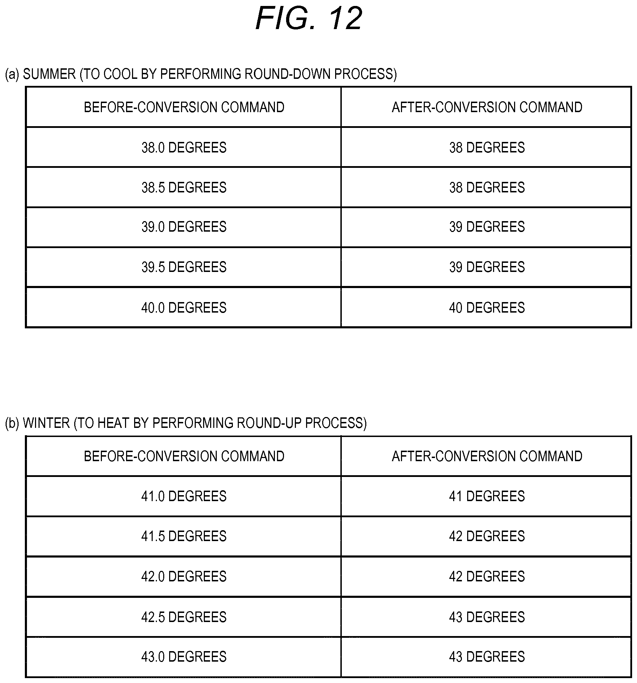

FIG. 12 is a diagram illustrating an example of a command conversion table in a case where the electric device is hot water supplying equipment in the second exemplary embodiment of the invention.

Assuming that when the before-conversion command (communication specification) can set the temperature by 0.5 degrees, the after-conversion command (hot water supplying equipment) can set the temperature by 1 degree. The hot water supplying equipment (electric device) includes a calendar in processor 301, it determines whether the season is summer or winter, and switches the command conversion table.

According to the season, for example, in summer, as illustrated in FIG. 12(a), the round-down process is performed such that the after-conversion command is to be 39 degrees when the before-conversion command is 39.5 degrees, for example. Accordingly, by lowering the temperature of the supplied hot water, user's comfort can be obtained.

In addition, in winter, as illustrated in FIG. 12(b), the round-up process is performed such that the after-conversion command is to be 43 degrees, when the before-conversion command is 42.5 degrees, for example. Accordingly, by increasing the temperature of the supplied hot water, user's comfort can be obtained.

Needless to say, the command conversion table may be configured to perform the round-up process in summer, and perform the round-down process in winter. In addition, although not illustrated in drawings, a command conversion table on an amount of the supplied hot water may be prepared in the same way as described above.

As described above, according to the present exemplary embodiment, by converting the command to an optimum command, the electric device can be smoothly controlled, even in a case where the command of the communication specification does not correspond to the command of the electric device one by one.

### (THIRD EXEMPLARY EMBODIMENT)

Next, a third exemplary embodiment of the invention will be described.

In the third exemplary embodiment, a case where a display content conversion table which is different from the inhibited operation table is retained in storage unit 302 will be described.

Here, it is assumed a case where the display content (electric device) after conversion depending on the electric device is different from each other although the command (standard specification) before conversion is the same for all electric devices.

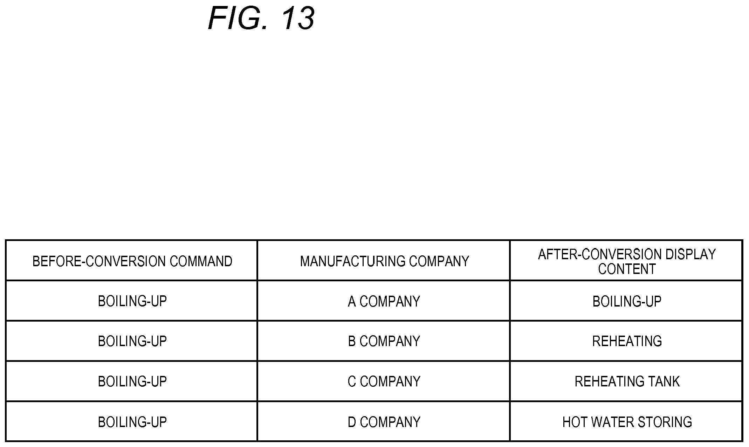

FIG. 13 is an example of a display content conversion table in a case where the electric device is hot water supplying equipment in third exemplary embodiment of the invention.

While the command before conversion is "boiling-up", the display contents of the command are different such as "boiling-up", "reheating", "reheating tank", and "hot water storing", depending on manufacturing companies A to D of the electric device. That is, in the electric device of the A company, the command before conversion can be displayed as "boiling-up" without any change. On the other hand, in the electric devices of the B to D companies, the "boiling-up" cannot be displayed. If the "boiling-up" is displayed, there is a possibility to confuse the user as the difference between the command of "boiling-up" displayed on the electric device and the commands of "reheating", "reheating tank", and "hot water storing" in a handling manual is uncertain.

The display contents after conversion are set differently, depending on the electric device. Although not illustrated in drawings, the after-conversion display contents may be set differently, depending on information selected from the model information, a serial number, and a version of the software of electric device in addition to the manufacturing company.

The display content conversion table includes the before-conversion command and the after-conversion display content as illustrated in FIG. 13.

The manufacturing company in the table may be the information selected from the model information, a serial number, and a version of the software of electric device. In a case where the electric device itself includes the display content table, since the information selected from the manufacturing company of the electric device itself, the model information, a serial number, and a version of the software of electric device may be referred, the electric device may not include a display content table relating to a manufacturing company which is not related to the electric device itself. The electric device may not include the model information, the serial number, and the version of the software of the electric device which is not related to the electric device itself.

The before-conversion command is a command which is adopted in terms of the communication specification for remote controlling, for example. The after-conversion display content is a display content which is adopted by electric device 300.

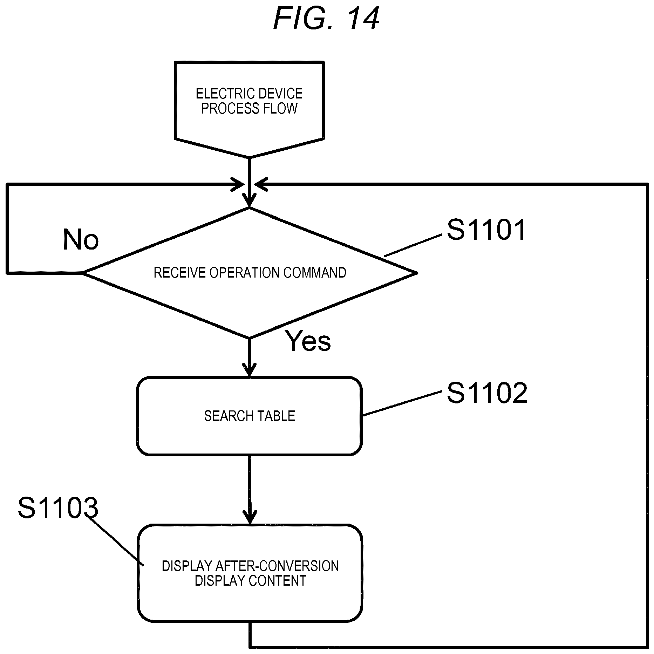

FIG. 14 is a diagram illustrating a process flow of electric device 300 in a case where a certain operation command is received in the third exemplary embodiment of the invention.

Electric device 300 confirms whether the operation command is received via communicator 303 (S1101). If the operation command is received (S1101, Yes), processor 301 searches a display content indicating a performance of the operation command which is included in the operation command identical to the command in the list of the before-conversion command, among the display content conversion table which is stored in storage unit 302 in advance (S1102). Processor 301 displays the after-conversion display content corresponding to the before-conversion command via output unit 305 (S1103).

The display content conversion table is managed by the manufacturing company of electric device 300. The manufacturing company updates the information by replacing the table stored in storage unit 302 from managing server 100 via the network and gateway 400 as needed.

For example, if the received operation command is the "boiling-up", and in a case where the electric device is manufactured by the B company, processor 301 displays the after-conversion display content (reheating) corresponding to the before-conversion command (boiling-up) via output unit 305.

Next, a display content conversion table which is different from the table of FIG. 13 will be described.

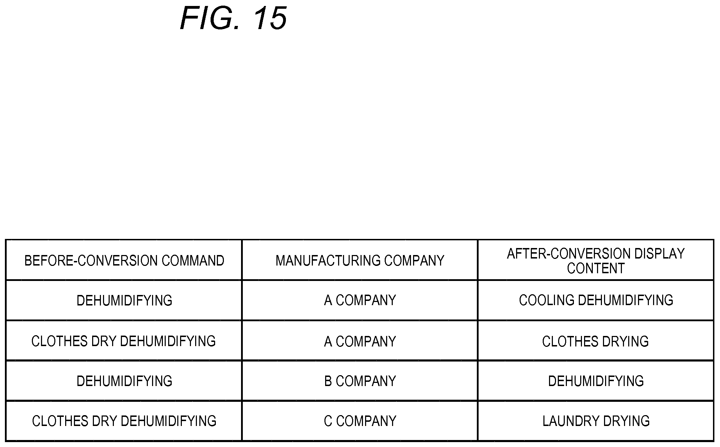

FIG. 15 is a diagram illustrating an example of the display content conversion table of a dehumidifying function in a case where the electric device is air-conditioning equipment in the third exemplary embodiment of the invention.

With respect to the before-conversion command, the display contents are different depending on the manufacturing companies.

For example, when the before-conversion command is the "dehumidifying", the after-conversion display content is converted to the "cooling dehumidifying" which is displayed in the air-conditioning equipment of the A company, and is converted to the "dehumidifying" which is displayed in the air-conditioning equipment of the B company. In addition, when the before-conversion command is the "clothes dry dehumidifying", the after-conversion display content is converted to the "clothes drying" which is displayed in the air-conditioning equipment of the A company, and is converted to the "laundry drying" which is displayed in the air-conditioning equipment of the C company.

As described above, according to the present exemplary embodiment, even if the display contents are different depending on the electric device with respect to the same command, it is possible to improve usability by converting the display content to the optimum display content.

In the above-described exemplary embodiments, a case where electric device 300 including the inhibited operation table, the command conversion table, and the display content conversion table performs the process is described. However, a configuration in which a part of these tables or all of the tables are supplied to a device different from electric device 300 in the control system to perform the process may be provided. For example, if the different device is mobile terminal 200, the process is performed by processor 201 and storage unit 202. If the different device is managing server 100, the process is performed by processor 101 and storage unit 102. If the different device is gateway 400, the process is performed by processor 401 and storage unit 402.

As described above, a first aspect according to the exemplary embodiments provides a control processing method of an electric device for implementing an operation content indicated by an operation command received from a control terminal, the method including a step of discriminating whether the received operation command is a predetermined operation command, and a step of notifying the control terminal that the operation content indicated by the operation command has not been implemented without implementing the operation content indicated by the operation command, in a case where the received operation command is the predetermined operation command.

Accordingly, in a case where a command specification of an industry standard is designed, although the electric device receives an unsupported command, it is possible to obtain that the electric device is smoothly controlled.

In a second aspect, in a case where the control terminal is notified that the operation content indicated by the operation command is not implemented, the notification includes information which indicates that the operation content is not implemented due to convenience of a manufacturing company of the electric device.

Accordingly, the user who transmits the control command from the control terminal can confirm whether the reason that the operation content which is indicated by the operation command is not implemented in the household electric appliance is due to the convenience of the manufacturing company or due to specification characteristics of the electric device.

In a third aspect, in the electric device, in the step of discriminating whether the received operation command is a predetermined operation command, the electric device uses a table indicating the operation command which cannot be implemented.

Accordingly, the electric device can rapidly determine whether the received operation command is the predetermined operation command.

In a fourth aspect, the predetermined operation command is a command which is designated by the manufacturing company of the electric device. Accordingly, the remote control can be reflected in a standard of the manufacturing company.

A fifth aspect provides a control processing method of an electric device for implementing an operation content indicated by an operation command received from a control terminal, the method including a step of discriminating whether the received operation command is a predetermined operation command, and a step of converting the content to a content similar to the content indicated by the operation command, in a case where the received operation command is the predetermined operation command.

Accordingly, in a case where a command specification of an industry standard is designed, although the electric device receives an unsupported command, it is possible to obtain that the electric device is smoothly controlled.

A sixth aspect provides a control processing method of an electric device for implementing an operation content indicated by an operation command received from a control terminal, the method including a step of discriminating whether the received operation command is a predetermined operation command, and a step of converting the content to a display content indicating a function similar to the content indicated by the operation command, in a case where the received operation command is the predetermined operation command.

Accordingly, in a case where a command specification of an industry standard is designed, although the electric device receives an unsupported command, it is possible to obtain that the electric device is smoothly controlled.

A seventh aspect provides an electric device including a processor for implementing an operation content indicated by an operation command which is received from a control terminal, in which the electric device discriminates whether the received operation command is a predetermined operation command, and in a case where the received operation command is the predetermined operation command, the electric device notifies the control terminal that the operation content indicated by the operation command has not been implemented without implementing the operation content indicated by the operation command.

Accordingly, in a case where a command specification of an industry standard is designed, although the electric device receives an unsupported command, it is possible to obtain that the electric device is smoothly controlled.

An eighth aspect provides a control processing program of an electric device for implementing an operation content indicated by an operation command which is received from a control terminal, the program causing a computer to execute: a step of discriminating whether the received operation command is a predetermined operation command, and a step of notifying the control terminal that the operation content indicated by the operation command has not been implemented without implementing the operation content indicated by the operation command, in a case where the received operation command is the predetermined operation command.

Accordingly, in a case where a command specification of an industry standard is designed, although the electric device receives an unsupported command, it is possible to obtain that the electric device is smoothly controlled.

### INDUSTRIAL APPLICABILITY

As described above, according to the control processing method, the electric device, and the control processing program in the invention, since in a case where a command specification of an industry standard is designed, although the electric device receives an unsupported command, it is possible to obtain that the electric device is smoothly controlled, the invention is useful.

### REFERENCE MARKS IN THE DRAWINGS

- 100: managing server
- 101: processor
- 102: storage unit
- 103: communicator
- 200: mobile terminal (control terminal)
- 201: processor
- 202: storage unit
- 203: communicator
- 204: input unit
- 205: output unit
- 300: electric device
- 301: processor
- 302: storage unit
- 303: communicator
- 304: input unit
- 305: output unit
- 306: operator
- 400: gateway
- 401: processor
- 402: storage unit
- 403: communicator
- 500: master communicator
- 600: slave communicator

## Claims

1. A control processing method of an electric device (300) for implementing an operation content indicated by an operation command received from a control terminal (200), the method comprising:
a step of discriminating whether the received operation command is a predetermined operation command; and
a step of notifying the control terminal (200) that the operation command is an unsupported command without implementing the operation content indicated by the operation command, in a case where the received operation command is the predetermined operation command **characterized in that**
in the step of discriminating whether a received operation command is a predetermined operation command, the electric device uses a table indicating an unsupported operation command.

2. The control processing method of claim 1,
wherein the predetermined operation command is a command which is designated by the manufacturing company of the electric device (300).

3. An electric device (300) comprising:
a processor (301) for implementing an operation content indicated by an operation command which is received from a control terminal (200),
wherein the processor (301) discriminates whether the received operation command is a predetermined operation command, and in a case where the received operation command is an unsupported operation command, the processor (301) notifies the control terminal (200) that the operation command is an unsupported command without implementing the operation content indicated by the operation command **characterized in that**
in the step of discriminating whether a received operation command is a predetermined operation command, the electric device uses a table indicating an unsupported operation command.

4. A control processing program of an electric device (300) for implementing an operation content indicated by an operation command which is received from a control terminal (200), the program causing a processor (301) of the electric device (300) to execute:
a step of discriminating whether the received operation command is a predetermined operation command; and
a step of notifying the control terminal (200) that the operation command is an unsupported operation command without implementing the operation content indicated by the operation command, in a case where the received operation command is the predetermined operation command **characterized in that**
in the step of discriminating whether a received operation command is a predetermined operation command, the electric device uses a table indicating an unsupported operation command.

5. A non-transitory computer readable medium storing a control processing program of an electric device (300) for implementing an operation content indicated by an operation command which is received from a control terminal (200),
wherein the medium is configured to realize a method including following steps when the control processing program is executed by a processor (301) of the electric device (300);
a step of discriminating whether the received operation command is a predetermined operation command; and
a step of notifying the control terminal (200) that the operation content indicated by the operation command has not been implemented without implementing the operation content indicated by the operation command, in a case where the received operation command is the predetermined operation command **characterized in that**
in the step of discriminating whether a received operation command is a predetermined operation command, the electric device uses a table indicating an unsupported operation command.

## Patentansprüche

1. Steuerverarbeitungsverfahren einer elektrischen Vorrichtung (300) zum Implementieren eines Operationsinhalts, der durch einen von einem Steuerterminal (200) empfangenen Operationsbefehl angezeigt wird, wobei das Verfahren enthält:
einen Schritt zum Differenzieren, ob der empfangene Operationsbefehl ein vorgegebener Operationsbefehl ist; und
einen Schritt, um das Steuerterminal (200) zu benachrichtigen, dass der Operationsbefehl ein nicht unterstützter Befehl ist, ohne den durch den Operationsbefehl angezeigten Operationsinhalt zu implementieren, in einem Fall, in dem der empfangene Operationsbefehl der vorgegebene Operationsbefehl ist, **dadurch gekennzeichnet, dass**
in dem Schritt zum Differenzieren, ob ein empfangener Operationsbefehl ein vorgegebener Operationsbefehl ist, die elektrische Vorrichtung eine Tabelle verwendet, die einen nicht unterstützten Operationsbefehl anzeigt.

2. Steuerverarbeitungsverfahren nach Anspruch 1,
wobei der vorgegebene Operationsbefehl ein Befehl ist, der von der Herstellerfirma der elektrischen Vorrichtung (300) bestimmt wird.

3. Elektrische Vorrichtung (300) enthaltend:
einen Prozessor (301) zum Implementieren eines Operationsinhalts, der durch einen Operationsbefehl angezeigt wird, der von einem Steuerterminal (200) angezeigt wird,
wobei der Prozessor (301) differenziert, ob der empfangene Operationsbefehl ein vorgegebener Operationsbefehl ist, und in einem Fall, in dem der empfangene Operationsbefehl ein nicht unterstützter Operationsbefehl ist, der Prozessor (301) das Steuerterminal (200) benachrichtigt, dass der Operationsbefehl ein nicht unterstützter Operationsbefehl ist, ohne den durch den Operationsbefehl angezeigten Operationsinhalt zu implementieren, **dadurch gekennzeichnet, dass**
in dem Schritt zum Differenzieren, ob ein empfangener Operationsbefehl ein vorgegebener Operationsbefehl ist, die elektrische Vorrichtung eine Tabelle verwendet, die einen nicht unterstützten Operationsbefehl anzeigt.

4. Steuerverarbeitungsprogramm einer elektrischen Vorrichtung (300) zum Implementieren eines Operationsinhalts, der durch einen von einem Steuerterminal (200) empfangenen Operationsbefehl angezeigt wird, wobei das Programm veranlasst, dass ein Prozessor (301) der elektrischen Vorrichtung (300) Folgendes ausführt:
einen Schritt zum Differenzieren, ob der empfangene Operationsbefehl ein vorgegebener Operationsbefehl ist; und
einen Schritt, um das Steuerterminal (200) zu benachrichtigen, dass der Operationsbefehl ein nicht unterstützter Operationsbefehl ist, ohne den durch den Operationsbefehl angezeigten Operationsinhalt zu implementieren, in einem Fall, in dem der empfangene Operationsbefehl der vorgegebene Operationsbefehl ist, **dadurch gekennzeichnet, dass**
in dem Schritt zum Differenzieren, ob ein empfangener Operationsbefehl ein vorgegebener Operationsbefehl ist, die elektrische Vorrichtung eine Tabelle verwendet, die einen nicht unterstützten Operationsbefehl anzeigt.

5. Nichtflüchtiges, computerlesbares Medium, das ein Steuerverarbeitungsprogramm einer elektrischen Vorrichtung (300) speichert, um einen Operationsinhalt zu implementieren, der durch einen Operationsbefehl angezeigt wird, der von einem Steuerterminal (200) empfangen wird,
wobei das Medium konfiguriert ist, ein Verfahren zu realisieren, das folgende Schritte beinhaltet, wenn das Steuerverarbeitungsprogramm durch einen Prozessor (301) der elektrischen Vorrichtung (300) ausgeführt wird;
einen Schritt zum Differenzieren, ob der empfangene Operationsbefehl ein vorgegebener Operationsbefehl ist; und
einen Schritt, um das Steuerterminal (200) zu benachrichtigen, dass der durch den Operationsbefehl angezeigte Operationsinhalt nicht implementiert wurde, ohne den durch den Operationsbefehl angezeigten Operationsinhalt zu implementieren, in einem Fall, in dem der empfangene Operationsbefehl der vorgegebene Operationsbefehl ist, **dadurch gekennzeichnet, dass**
in dem Schritt zum Differenzieren, ob ein empfangener Operationsbefehl ein vorgegebener Operationsbefehl ist, die elektrische Vorrichtung eine Tabelle verwendet, die einen nicht unterstützten Operationsbefehl anzeigt.

## Revendications

1. Procédé de traitement de régulation d'un dispositif électrique (300) pour mettre en oeuvre un contenu d'opération indiqué par une commande d'opération reçue en provenance d'un terminal de régulation (200), le procédé comprenant:
une étape consistant à distinguer si la commande d'opération reçue est une commande d'opération prédéterminée; et
une étape consistant à notifier au terminal de régulation (200) que la commande d'opération est une commande non supportée sans mettre en oeuvre le contenu d'opération indiqué par la commande d'opération, dans un cas où la commande d'opération reçue est la commande d'opération prédéterminée, **caractérisé en ce que**
dans l'étape consistant à distinguer si une commande d'opération reçue est une commande d'opération prédéterminée, le dispositif électrique utilise une table indiquant une commande d'opération non supportée.

2. Procédé de traitement de régulation selon la revendication 1,
dans lequel la commande d'opération prédéterminée est une commande qui est désignée par la société de fabrication du dispositif électrique (300).

3. Dispositif électrique (300) comprenant:
un processeur (301) pour mettre en oeuvre un contenu d'opération indiqué par une commande d'opération qui est reçue en provenance d'un terminal de régulation (200),
dans lequel le processeur (301) distingue si la commande d'opération reçue est une commande d'opération prédéterminée, et dans un cas où la commande d'opération reçue est une commande d'opération non supportée, le processeur (301) notifie au terminal de régulation (200) que la commande d'opération est une commande non supportée sans mettre en oeuvre le contenu d'opération indiqué par la commande d'opération, **caractérisé en ce que**
dans l'étape consistant à distinguer si une commande d'opération reçue est une commande d'opération prédéterminée, le dispositif électrique utilise une table indiquant une commande d'opération non supportée.

4. Programme de traitement de régulation d'un dispositif électrique (300) pour mettre en oeuvre un contenu d'opération indiqué par une commande d'opération qui est reçue en provenance d'un terminal de régulation (200), le programme amenant un processeur (301) du dispositif électrique (300) à exécuter:
une étape consistant à distinguer si la commande d'opération reçue est une commande d'opération prédéterminée; et
une étape consistant à notifier au terminal de régulation (200) que la commande d'opération est une commande d'opération non supportée sans mettre en oeuvre le contenu d'opération indiqué par la commande d'opération, dans un cas où la commande d'opération reçue est la commande d'opération prédéterminée, **caractérisé en ce que**
dans l'étape consistant à distinguer si une commande d'opération reçue est une commande d'opération prédéterminée, le dispositif électrique utilise une table indiquant une commande d'opération non supportée.

5. Support lisible par ordinateur non transitoire stockant un programme de traitement de régulation d'un dispositif électrique (300) pour mettre en oeuvre un contenu d'opération indiqué par une commande d'opération qui est reçue en provenance d'un terminal de régulation (200),
dans lequel le support est configuré pour réaliser un procédé comprenant les étapes suivantes lorsque le programme de traitement de régulation est exécuté par un processeur (301) du dispositif électrique (300);
une étape consistant à distinguer si la commande d'opération reçue est une commande d'opération prédéterminée; et
une étape consistant à notifier au terminal de régulation (200) que le contenu d'opération indiqué par la commande d'opération n'a pas été mis en oeuvre sans mettre en oeuvre le contenu d'opération indiqué par la commande d'opération, dans un cas où la commande d'opération reçue est la commande d'opération prédéterminée, **caractérisé en ce que**
dans l'étape consistant à distinguer si une commande d'opération reçue est une commande d'opération prédéterminée, le dispositif électrique utilise une table indiquant une commande d'opération non supportée.
